# EUROPEAN PATENT APPLICATION

(11) **EP 3 385 156 A1**
(43) Date of publication of application: **10.10.2018**
(21) Application number: 15909709.6
(22) Date of filing: 30.11.2015
(51) Int. Cl.: B63B 9/00, B63B 59/04

(54) **SHIP ASSISTANCE DEVICE AND METHOD**

(71) Applicant: Nippon Yusen Kabushiki Kaisha, Tokyo 100-0005 (JP)
(72) Inventor: ADACHI, Kazuo, Tokyo 100-0005 (JP); HORIKIRI, Rokuro, Tokyo 100-0005 (JP); ANDO, Hideyuki, Tokyo 100-0005 (JP); TANIGAWA, Masahiko, Tokyo 100-0005 (JP)
(74) Representative: Moore, Graeme Patrick
(86) International application number: PCT/JP2015/083638
(87) International publication number: WO 2017/094079

(57) **Abstract**

A ship support apparatus is configured to output support information indicating at least one of a maintenance method recommended for a hull of a target ship and a painting method recommended for the hull of the target ship based on a fluid analysis result or a measurement result that indicates one of the distribution of shear stress on a hull surface of the target ship or another ship whose type is the same as the type of the target ship and the distribution of another parameter of the target ship or the other ship that correlates with the distribution of shear stress.

## Description

### TECHNICAL FIELD

This disclosure relates to a ship support apparatus and a ship support method.

### BACKGROUND ART

There is a known technology for calculating a percentage of increase in frictional resistance of a ship-bottom-paint coating on a base material relative to a mirror-finished surface (see, for example, Patent Document 1).

### [RELATED-ART DOCUMENT]

### [Patent Document]

[Patent Document 1] Japanese Laid-Open Patent Publication No. 2013-217766

### DISCLOSURE OF INVENTION

### PROBLEMS TO BE SOLVED BY THE INVENTION

When a ship travels, for example, shear stress is applied by the flow of a fluid (typically, sea water) to the ship hull. The distribution of the shear stress on the hull surface depends on, for example, the shape of the ship hull. In an area where shear stress is large, compared with an area where shear stress is small, the velocity gradient is large and the flow velocity of the fluid on the hull surface is high. Accordingly, the shear stress distribution is a useful parameter in determining maintenance methods and painting methods for respective areas of the ship hull.

An object of this disclosure is to provide a ship support apparatus that can output useful support information based on shear stress distribution on a hull surface.

### MEANS FOR SOLVING THE PROBLEMS

In an aspect of this disclosure, there is provided a ship support apparatus configured to output support information indicating at least one of a maintenance method recommended for a hull of a target ship and a painting method recommended for the hull of the target ship based on a fluid analysis result or a measurement result that indicates one of the distribution of shear stress on a hull surface of the target ship or another ship whose type is the same as the type of the target ship and the distribution of another parameter of the target ship or the other ship that correlates with the distribution of shear stress.

### ADVANTAGEOUS EFFECT OF THE INVENTION

This disclosure makes it possible to provide a ship support apparatus that can output useful support information based on shear stress distribution on a hull surface.

### BRIEF DESCRIPTION OF THE DRAWINGS

FIG. 1 is a drawing illustrating an example of a hardware configuration of a ship support apparatus 100;
FIG. 2A is a drawing illustrating an example of functional blocks of the ship support apparatus 100;
FIG. 2B is a drawing illustrating an example of data in an analysis result database 140;
FIG. 3 is a flowchart illustrating an example of a process performed by a ship support apparatus 100A;
FIG. 4A is a drawing illustrating a fluid analysis result indicating shear stress distribution;
FIG. 4B is a drawing illustrating an example of output support information;
FIG. 5A is a flowchart illustrating another example of a process performed by the ship support apparatus 100A;
FIG. 5B is a drawing illustrating an example of output support information;
FIG. 6 is a drawing illustrating an example of functional blocks of a ship support apparatus 100B according to a second embodiment;
FIG. 7 is a flowchart illustrating an example of a process performed by the ship support apparatus 100B;
FIG. 8A is a drawing illustrating an example of output support information indicating recommended coating-thickness distribution;
FIG. 8B is a drawing illustrating an example of output support information indicating recommended coating-thickness distribution;
FIG. 9 is a flowchart illustrating another example of a process performed by the ship support apparatus 100B; and
FIG. 10 is a flowchart illustrating still another example of a process performed by the ship support apparatus 100B.

### DESCRIPTION OF EMBODIMENTS

Embodiments are described below in detail with reference to the accompanying drawings.

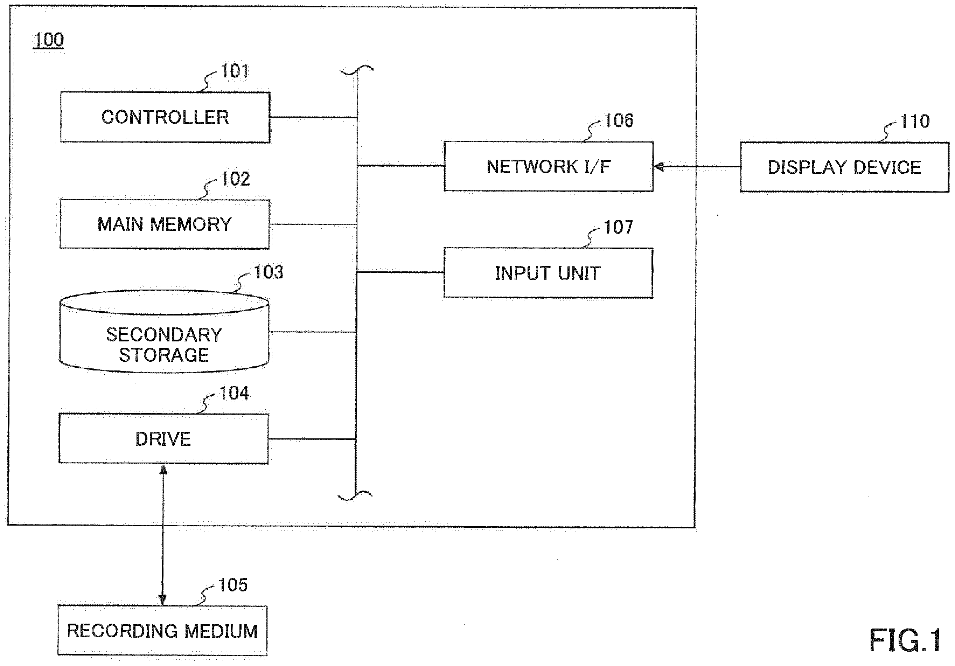

FIG. 1 is a drawing illustrating an example of a hardware configuration of a ship support apparatus 100. The ship support apparatus 100 outputs at least one of support information indicating a maintenance method recommended for a ship hull and support information indicating a painting method recommended for a ship hull. For example, support information indicating a maintenance method recommended for a ship hull may indicate priority areas of the ship hull on which maintenance (e.g., blasting) is to be performed.

In the example of FIG. 1, the ship support apparatus 100 includes a controller 101, a main memory 102, a secondary storage 103, a drive 104, a network I/F 106, and an input unit 107.

The controller 101 is a processor that executes programs stored in a storage device such as the main memory 102 or the secondary storage 103, receives data from the input unit 107 or the storage device, processes the received data, and outputs the processed data to, for example, the storage device.

The main memory 102 is, for example, a read-only memory (ROM) or a random access memory (RAM). The main memory 102 stores or temporarily stores data and programs such as basic software (operating system (OS)) and application software to be executed by the controller 101.

The secondary storage 103 is implemented by, for example, a hard disk drive (HDD) and stores data related to, for example, application software.

The drive 104 reads programs from a recording medium 105 such as a flexible disk and installs the read programs in the storage device.

The recording medium 105 stores programs. The programs stored in the recording medium 105 are installed in the secondary storage 103 via the drive 104. The installed programs can be executed by the controller 101.

The network I/F 106 is an interface between the ship support apparatus 100 and a display device 110 that includes a communication function and is connected to the ship support apparatus 100 via a network implemented by wired and/or wireless data transmission channels. The display device 110 is, for example, a liquid crystal display.

The input unit 107 includes, for example, a keyboard including a cursor key, numeric keys, and various function keys, a mouse, and a touchpad. The input unit 107 implements a user interface in collaboration with the display device 110.

In the example of FIG. 1, various processes described below can be performed by executing programs by the controller 101. Also, programs and data may be stored in the recording medium 105, and the ship support apparatus 100 may read the programs and the data from the recording medium 105 to execute various processes described below. The recording medium 105 may be implemented by any type of storage medium. For example, the recording medium 105 may be a compact disk (CD)-ROM, a flexible disk, or a magneto-optical disk that records information optically, electrically, or magnetically; or a semiconductor memory such as a ROM or a flash memory that records information electrically.

Next, several embodiments of the ship support apparatus 100 are described in sequence.

### <FIRST EMBODIMENT

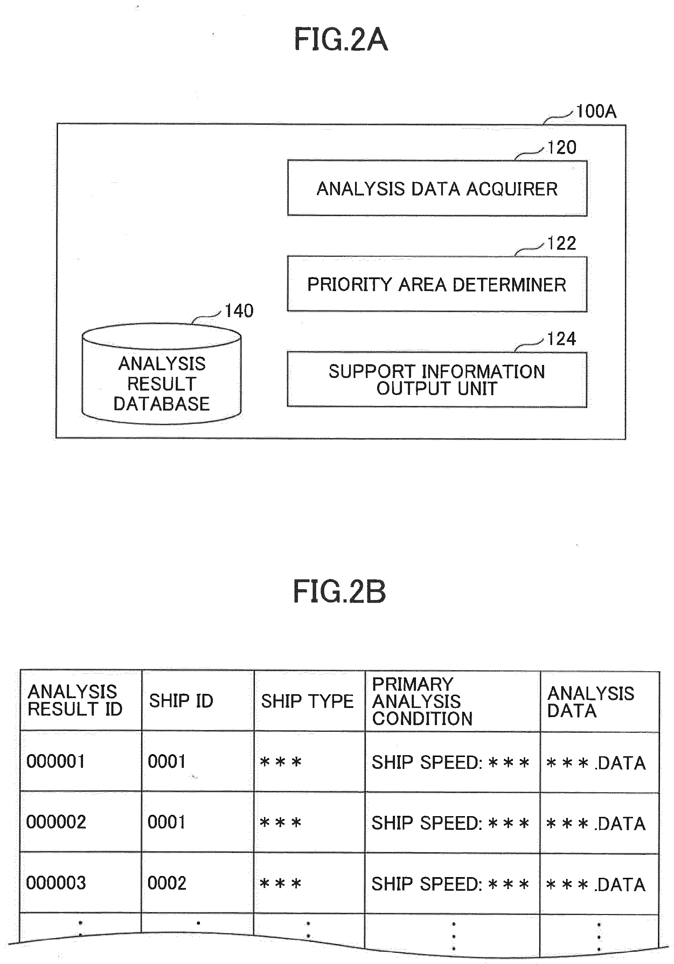

FIG. 2A is a drawing illustrating an example of functional blocks of a ship support apparatus 100A according to a first embodiment.

The ship support apparatus 100A includes an analysis data acquirer 120, a priority area determiner 122, a support information output unit 124, and an analysis result database 140. The analysis data acquirer 120, the priority area determiner 122, and the support information output unit 124 may be implemented by executing one or more programs stored in, for example, the main memory 102 by the controller 101 in FIG. 1. The analysis result database 140 may be implemented by the secondary storage 103 in FIG. 1.

The analysis data acquirer 120 obtains, from the analysis result database 140 (FIG. 2B), a fluid analysis result indicating the distribution of shear stress on the surface of a hull of a target ship (which may be simply referred to as a "ship hull"). The target ship indicates a ship for which support information is to be obtained, and may be specified by a user via a user interface. If a fluid analysis result for the target ship exists in the analysis result database 140, the analysis data acquirer 120 obtains the fluid analysis result. In contrast, if no fluid analysis result for the target ship exists in the analysis result database 140, the analysis data acquirer 120 may obtain, from the analysis result database 140, a fluid analysis result for another ship whose shear stress distribution characteristics are similar to those of the target ship. For example, the analysis data acquirer 120 may obtain a fluid analysis result indicating the distribution of shear stress for another ship whose ship type is the same as the ship type of the target ship. In this case, if multiple fluid analysis results for other ships exist in the analysis result database 140, the analysis data acquirer 120 may obtain a fluid analysis result whose analysis condition matches or is similar to a travel condition (e.g., ship speed) of the target ship.

Also, if multiple fluid analysis results are stored in the analysis result database 140, the analysis data acquirer 120 may obtain a fluid analysis result that is specified by a user on an interactive user interface. For example, the analysis data acquirer 120 may present contents of data in the analysis result database 140 via the display device 110 to the user, and obtain a fluid analysis result specified via the input unit 107 by the user from the analysis result database 140. Also, the analysis data acquirer 120 may obtain a fluid analysis result from a source other than the analysis result database 140. For example, the analysis data acquirer 120 may obtain (import) a fluid analysis result via the recording medium 105 or the network I/F 106 from an external source.

Here, the distribution of shear stress corresponds to the distribution of frictional force per unit area. In this case, the distribution of shear stress may be obtained by extracting only traveling-direction components (components in the traveling direction of the target ship) of shear stress or represented by combined components (combined components including traveling-direction components) of shear stress.

Based on the fluid analysis result, the priority area determiner 122 determines priority areas of the ship hull on which blasting is to be performed. The priority areas are portions of an entire area (which is hereafter referred to as a "blasting feasible area") of the ship hull on which blasting can be performed. The blasting feasible area indicates an area on which blasting is performed in a dock in a blasting process for the entire hull. For example, the blasting feasible area may be the entire ship bottom (i.e., an entire area corresponding to the entire wetted surface area). The blasting feasible area is included in an area for which the distribution of shear stress is obtained based on the fluid analysis result. Details of the method for determining priority areas are described later.

The support information output unit 124 outputs support information indicating a maintenance method recommended for the ship hull. Typically, as described later, maintenance performed according to the maintenance method is blasting in a dry environment such as a dock. However, the maintenance is not limited to blasting in a dry environment. For example, the maintenance may be performed underwater (e.g., cleaning or grinding performed by an underwater cleaning robot) or may be painting. A case where the maintenance includes painting is described later in a second embodiment. Examples of support information and methods of outputting support information by the support information output unit 124 are described later.

The analysis result database 140 stores fluid analysis results indicating shear stress distribution on hull surfaces of ships. The fluid analysis results indicating shear stress distribution may be obtained by, for example, performing numerical analysis such as computational fluid dynamics (CFD). The shear stress distribution is the distribution of shear stress on a hull surface that contacts a fluid. Any analysis condition may be used. For example, a uniform flow may be assumed as an analysis condition. Also, an analysis condition may be set depending on a travel condition of each ship. For example, fluid analysis results may be obtained from an external source via the recording medium 105 and stored in the analysis result database 140, or may be obtained from an external source via the network I/F 106 and stored in the analysis result database 140. Also, the ship support apparatus 100A may include an analysis function. In this case, fluid analysis results are directly stored in the analysis result database 140.

FIG. 2B is a drawing illustrating an example of data in the analysis result database 140. In the example of FIG. 2B, the analysis result database 140 stores, for each analysis result ID (identification) identifying a fluid analysis result, a ship ID identifying a target ship, a ship type indicating the type (an attribute such as a shape) of the target ship, a primary analysis condition (e.g., ship speed), and analysis data. In the example of FIG. 2B, analysis data is provided as a file. In FIG. 2B, "***" indicates numerals or characters.

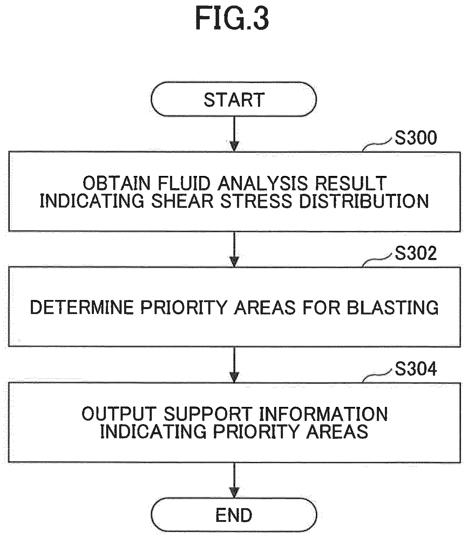

FIG. 3 is a flowchart illustrating an example of a process performed by the ship support apparatus 100A. For example, the process of FIG. 3 is performed when planning maintenance of a hull of a target ship.

At step S300, the analysis data acquirer 120 obtains, from the analysis result database 140, a fluid analysis result indicating the distribution of shear stress on the surface of a ship hull (a hull of a target ship). For example, the analysis data acquirer 120 obtains a fluid analysis result for a target ship from the analysis result database 140 in response to a support start command input by a user via the input unit 107. In this case, information (e.g., a ship ID) for identifying the target ship may be input by the user via the input unit 107 together with the support start command.

At step S302, based on the fluid analysis result obtained at step S300, the priority area determiner 122 determines priority areas of the ship hull on which blasting is to be performed. For example, the priority area determiner 122 extracts multiple areas from the blasting feasible area in descending order of shear stress, and determines priority areas based on the extracted areas. In this step, for example, the priority area determiner 122 extracts a predetermined number of areas in descending order of shear stress, and determines the extracted predetermined number of areas as priority areas. The predetermined number may be determined based on the square measure of each area, and may be determined, for example, taking into account a maintenance cost required for blasting. The unit of areas to be extracted may be set at any value. For example, the unit of areas to be extracted may correspond to a grid size in the fluid analysis result.

At step S304, based on the priority areas determined at step S302, the support information output unit 124 outputs support information indicating the priority areas on the display device 110. The support information may be any type of information that directly or indirectly indicates the priority areas. For example, the support information may simply indicate the positions of the priority areas, may indicate a boundary (or a region) that encompasses a collection of the priority areas, or may visually indicate the positions of the priority areas in a hull shape. Also, the support information may indicate a blasting region. In this case, the blasting region may not necessarily be a region including only the priority areas, and may be a region determined to also include an area surrounding the priority areas taking into account the ease of the maintenance work.

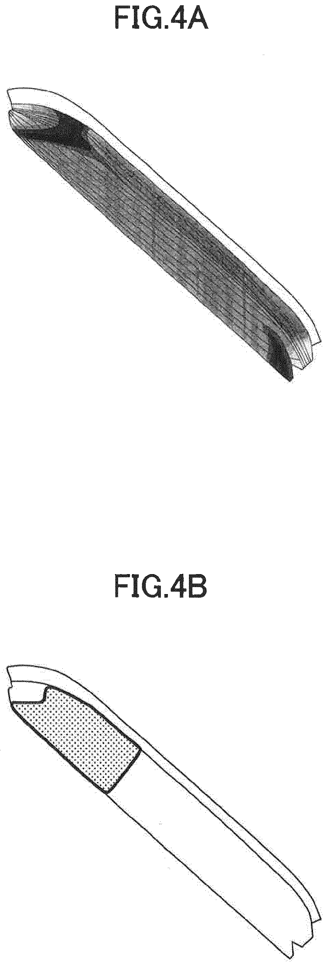

FIG. 4A is a drawing illustrating a fluid analysis result indicating shear stress distribution, and FIG. 4B is a drawing illustrating an example of output support information.

In FIG. 4A, the shear stress distribution is represented by greyscale shades. In this example, a shade closer to black indicates larger shear stress.

In the example of FIG. 4B, the support information includes visual information indicating a blasting region that is indicated by hatching. In addition to the visual information, the support information may also include textual information that specifies the blasting region with numeric values. For example, the textual information may include "<Length Direction> From: xx m from FP toward stern To: xx m from FP toward stern", "<Width Direction> From: center line To: full width", and "<Height Direction> From: 0 m (bottom) To: xx m". In this textual information, "**" indicates numerals. Also in this textual information, FP indicates "fore perpendicular". Support information may also include information related to actual maintenance work. For example, support information may include a message such as "Maintenance work needs to be preferentially performed on a full width portion near the bow where shear stress is large and on a flat bottom portion. A horizontal portion needs to be preferentially selected over a bow portion taking into account the ease of maintenance work".

A blasting region may also be defined as, for example, a section indicated by starting and ending frame numbers. Further, depending on a ship type, the location of a blasting region may be finely specified by a cargo hold number.

As described above, compared with an area of a ship hull with smaller shear stress, an area of the ship hull with larger shear stress contributes more to the frictional resistance of water (typically, sea water) to the entire ship hull during traveling. Accordingly, the frictional resistance of water to the entire ship hull can be more effectively reduced by reducing the surface roughness of the area with larger shear stress than by reducing the surface roughness of the area with smaller shear stress.

In the process of FIG. 3, as described above, priority areas are determined in descending order of shear stress based on a fluid analysis result indicating shear stress distribution. Thus, the process of FIG. 3 can generate useful support information that makes it possible to efficiently perform blasting.

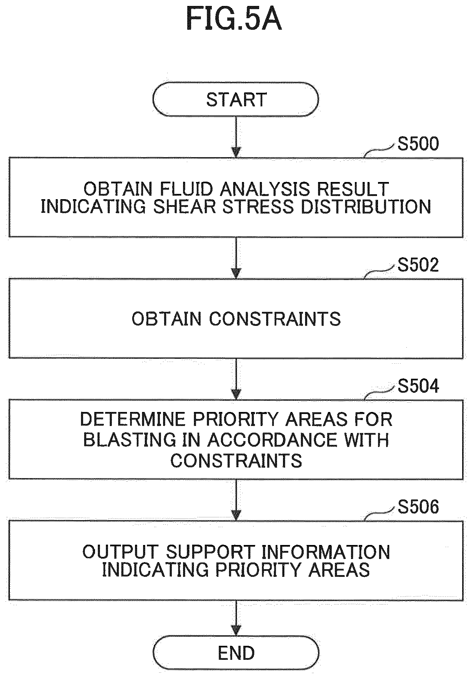

FIG. 5A is a flowchart illustrating another example of a process performed by the ship support apparatus 100A. For example, the process of FIG. 5A is performed when planning maintenance of a hull of a target ship.

Steps S500 and S506 are respectively the same as steps S300 and S304 described above, and therefore their descriptions are omitted here.

At step S502, the priority area determiner 122 obtains a constraint(s). For example, the constraint may be based on information input by a user via the input unit 107. In this case, the constraint may be input by the user via the input unit 107 together with a support start command. Alternatively, the priority area determiner 122 may request a user to input a constraint (s) on the input unit 107 via an interactive user interface. At least one of the time and the cost available for blasting may be used as the constraint. For example, the upper limits of the time and the cost available for blasting may be used as constraints.

At step S504, based on the fluid analysis result obtained at step S500 and in accordance with the constraints obtained at step S502, the priority area determiner 122 determines priority areas of the ship hull on which blasting is to be performed. For example, priority areas may be determined according to methods described below.

In a first method for determining priority areas, the priority area determiner 122 extracts a predetermined number (N) of areas from the blasting feasible area in descending order of shear stress, and determines priority areas based on the extracted areas. In this case, the priority area determiner 122 may extract a largest number of areas in accordance with the constraints (the time and the cost available for blasting), and determine priority areas based on the extracted areas. The priority area determiner 122 may determine the extracted areas themselves as priority areas, or may determine areas larger than and respectively including the extracted areas as priority areas. Also, the ship hull may be divided into multiple blocks beforehand, and the priority area determiner 122 may extract a predetermined number (N) of blocks in descending order of the number of areas included in each of the blocks and having shear stress that is greater than or equal to a predetermined value (or in descending order of the average value of shear stress of all areas included in each of the blocks), and may determine priority areas based on the extracted blocks. In this case, the priority area determiner 122 determines areas corresponding to the extracted blocks as priority areas. Also in this case, priority areas are determined such that the constraints are satisfied when blasting is performed on the priority areas.

In a second method for determining priority areas, the priority area determiner 122 temporarily (not finally) determines priority areas according to the first method described above. Then, the priority area determiner 122 calculates a fuel-saving effect that is expected to be achieved when the surface roughness is reduced by performing blasting on the temporarily-determined priority areas. For example, the priority area determiner 122 calculates a fuel-saving effect during a predetermined time period based on the surface roughness expected to be achieved when blasting is performed on the temporarily-determined priority areas and other parameters related to the fuel-saving effect (e.g., propulsive performance, wetted surface area, various coefficients, displacement, ship speed, fuel price, and operating ratio). Here, the propulsive performance (e.g., a relationship between speed and force power) may be obtained based on, for example, design values. The surface roughness expected to be achieved when blasting is performed indicates surface roughness reduced by the blasting, and may be represented by an expected value or a value obtained based on experience. The predetermined time period may be set at any value. For example, the predetermined time period may be a period between the current time and the next or subsequent time when maintenance is performed in the dock. In this case, the fuel-saving effect may be calculated taking into account changes in the surface roughness during the predetermined time period. The fuel-saving effect may be represented by, for example, a parameter such as an amount of fuel saved per day or a fuel cost saved per year. The priority area determiner 122 calculates an evaluation value indicating a relationship between the calculated fuel-saving effect and a maintenance cost necessary to perform blasting on the temporarily-determined priority areas. The evaluation value may be represented by, for example, a benefit during the predetermined time period (a value obtained by subtracting the maintenance cost from a fuel cost saved during the predetermined time period) or a payback period of the maintenance cost. Then, the priority area determiner 122 searches for the optimum solution of the relationship between the fuel-saving effect and the maintenance cost by changing the predetermined number N in accordance with the constraints (and thereby changing the square measure of the temporarily-determined priority areas), and determines the temporarily-determined priority areas resulting in the optimum solution as priority areas. For example, the priority area determiner 122 may be configured to search for the optimum solution that maximizes the benefit during the predetermined time period by changing the predetermined number N.

In the process of FIG. 5A, as described above, priority areas are determined in descending order of shear stress based on a fluid analysis result indicating shear stress distribution. Thus, the process of FIG. 5A can generate useful support information that makes it possible to efficiently perform blasting. Also in the process of FIG. 5A, priority areas are determined in accordance with constraints. This in turn makes it possible to generate useful support information that makes it possible to optimally perform blasting in accordance with the constraints.

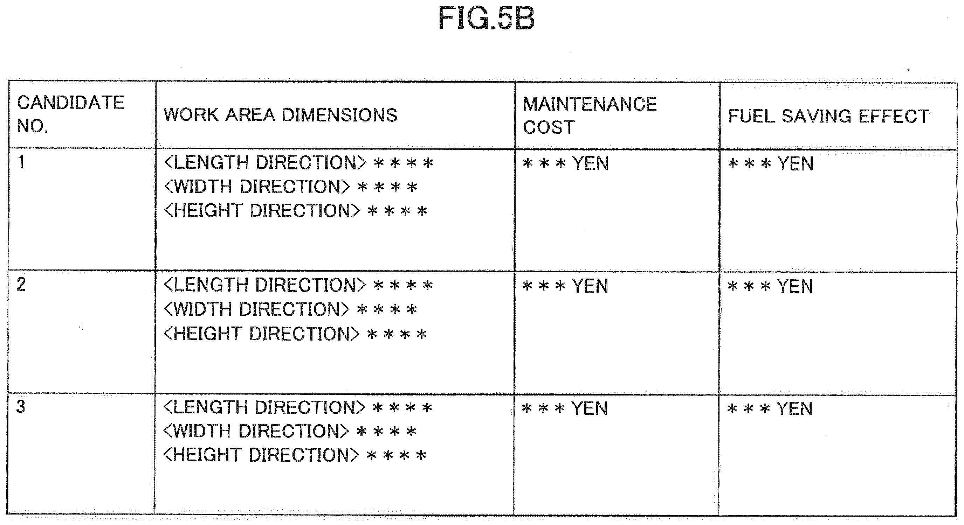

In the process of FIG. 5A, support information is generated based on priority areas resulting in the optimal solution. However, the present invention is not limited to this example. For example, as illustrated by FIG. 5B, support information may indicate several candidates that satisfy constraints together with information indicating maintenance costs and fuel-saving effects of the respective candidates. In FIG. 5B, "****" is a placeholder for information. In the example of FIG. 5B, support information may also include a payback period of a maintenance cost.

### <SECOND EMBODIMENT>

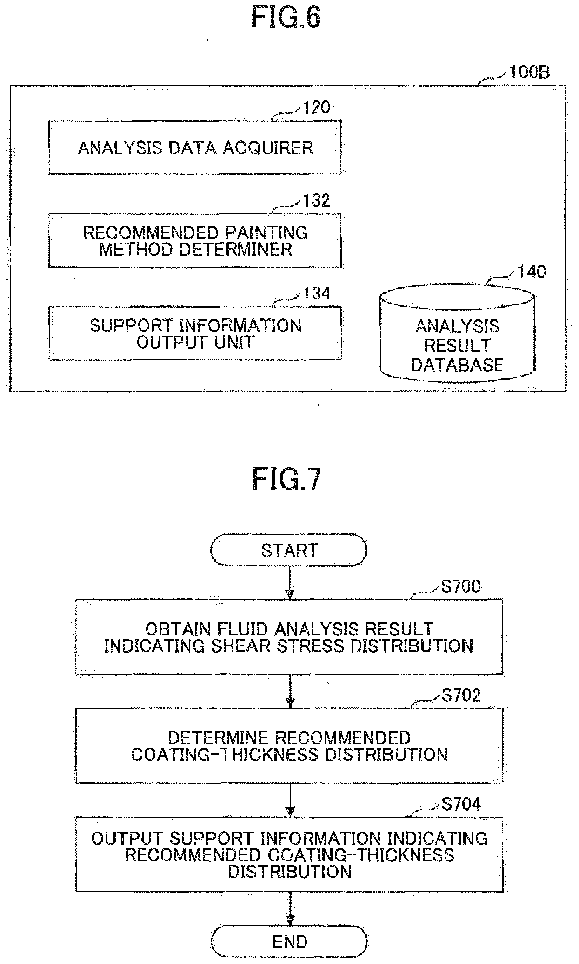

FIG. 6 is a drawing illustrating an example of functional blocks of a ship support apparatus 100B according to a second embodiment. The same reference numbers as those assigned to components of the ship support apparatus 100A of the first embodiment described above are assigned to the corresponding components in FIG. 6, and descriptions of those components are omitted.

The ship support apparatus 100B includes an analysis data acquirer 120, a recommended painting method determiner 132, a support information output unit 134, and an analysis result database 140. The analysis data acquirer 120, the recommended painting method determiner 132, and the support information output unit 134 may be implemented by executing one or more programs stored in, for example, the main memory 102 by the controller 101 in FIG. 1.

The recommended painting method determiner 132 determines a painting method recommended for a ship hull (which is hereafter referred to as a "recommended painting method") based on a fluid analysis result indicating shear stress distribution on the surface of the ship hull. The recommended painting method, for example, indicates recommended coating thicknesses on the ship hull and types of paint recommended for the ship hull. Details of a method for determining the recommended painting method are described later.

The support information output unit 134 outputs support information indicating a recommended painting method. Examples of support information and methods of outputting support information by the support information output unit 134 are described later.

FIG. 7 is a flowchart illustrating an example of a process performed by the ship support apparatus 100B. For example, the process of FIG. 7 may be performed when planning initial painting of a ship hull or painting of a ship hull for maintenance.

Step S700 is the same as step S300 described above, and therefore the descriptions of step S700 are omitted here.

At step S702, based on a fluid analysis result obtained at step S700, the recommended painting method determiner 132 determines the distribution of coating thickness recommended for the ship hull (which is hereafter simply referred to as "recommended coating-thickness distribution"). The recommended coating-thickness distribution indicates the distribution of recommended coating thickness in a painting target area of the ship hull. The recommended coating-thickness distribution may indicate relative relationships of coating thickness among areas of the ship hull (i.e., differences or ratios in coating thickness among areas) or indicate recommended values of coating thickness of respective areas. When painting is performed for maintenance, the recommended coating-thickness distribution may include areas whose recommended value is "0" (i.e., "painting is not required"). The painting target area is included in an area for which the distribution of shear stress is obtained based on the fluid analysis result.

For example, the recommended painting method determiner 132 determines recommended coating-thickness distribution based on the ratios of shear stress among areas of the ship hull. That is, the recommended painting method determiner 132 determines recommended coating-thickness distribution such that the recommended coating thickness of an area with relatively large shear stress becomes greater than the recommended coating thickness of an area with relatively small shear stress. In this case, the recommended coating thickness may be determined according to a simple proportional relationship where, for example, the recommended coating thickness doubles when the shear stress doubles, or according to another relationship (e.g., a relationship where the recommended coating thickness increases exponentially in relation to shear stress). Also, the recommended painting method determiner 132 may calculate recommended values of coating thickness for areas of the ship hull based on the magnitude of shear stress of the respective areas. In this case, the recommended painting method determiner 132 may be configured to calculate (or correct) recommended values based on forecast average water temperature (typically, sea water temperature) during travel of the target ship. This is because the amount (dissolution rate) of paint that dissolves in water varies depending on the water temperature.

Alternatively, the recommended painting method determiner 132 may be configured to derive the distribution of flow velocity of fluid on the hull surface (the coating surface) based on the shear stress distribution (or to obtain a fluid analysis result indicating the distribution of flow velocity), and to determine recommended coating-thickness distribution based on the ratios of flow velocity (flow velocity on the hull surface) among areas of the ship hull. The flow velocity on the hull surface (the coating surface) may be the flow velocity in a grid that is closest to the hull surface or the flow velocity in a grid near the outer edge of a boundary layer. For example, the recommended painting method determiner 132 may determine recommended coating-thickness distribution such that the recommended coating thickness of an area where flow velocity is relatively high becomes greater than the recommended coating thickness of an area where flow velocity is relatively low. In this case, the recommended coating thickness may be determined according to a simple proportional relationship where, for example, the recommended coating thickness doubles when the flow velocity doubles, or according to another relationship (e.g., a relationship where the recommended coating thickness increases exponentially in relation to the flow velocity). Also, the recommended painting method determiner 132 may calculate recommended values of coating thickness for areas of the ship hull based on the flow velocity in the respective areas. Also in this case, the recommended painting method determiner 132 may calculate recommended values based on forecast average water temperature during travel of the target ship.

At step S704, based on the recommended coating-thickness distribution determined at step S702, the support information output unit 134 outputs support information indicating the recommended coating-thickness distribution on the display device 110. The support information may be any type of information that directly or indirectly indicates the recommended coating-thickness distribution. The support information may simply indicate recommended values of coating thickness (which are hereafter referred to as "recommended coating thickness") of respective areas of the ship hull, or may indicate boundaries (or perimeters) each of which indicates a region with the same recommended coating thickness. Also, the support information may indicate a painting method. In this case, the support information may further include information indicating an amount of paint (antifouling paint) and a cost necessary to perform the painting method. The painting method is determined based on the recommended coating-thickness distribution. However, the painting method may use coating thickness distribution that does not completely match the recommended coating-thickness distribution to improve the ease of painting work. For example, a region with a recommended coating thickness may be expanded outward to have a square measure that is greater than a predetermined value.

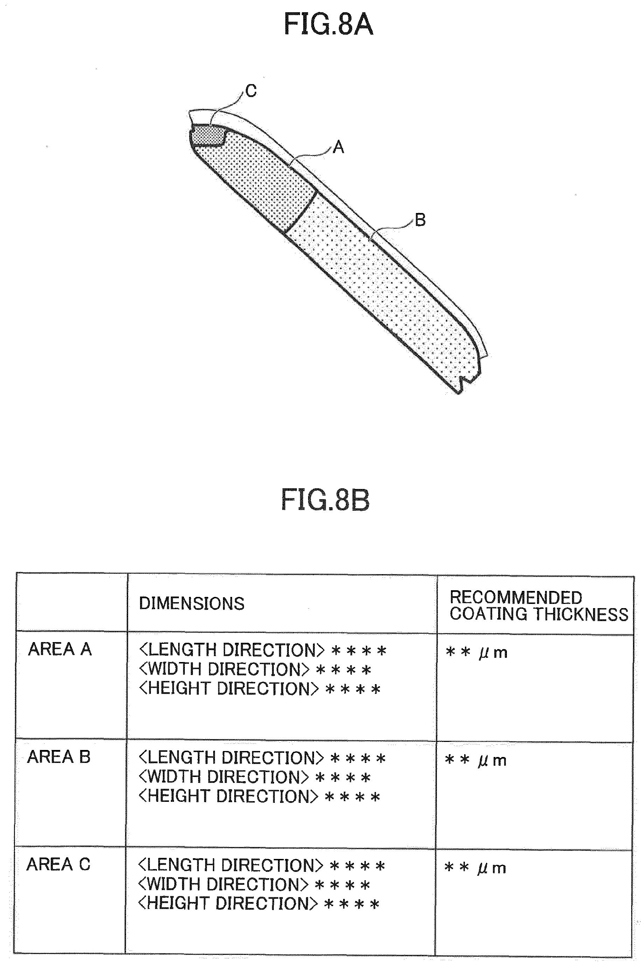

FIG. 8A is a drawing illustrating an example of output support information. In FIG. 8A, the recommended coating-thickness distribution is represented by three regions A, B, and C. In the example of FIG. 8A, the support information includes visual information where the regions A, B, and C, each of which has a same recommended coating thickness, are separated by boundaries (perimeters). In addition to the visual information, the support information may include textual information indicating, for example, the dimensions and the recommended coating thicknesses of the regions A, B, and C as illustrated by FIG. 8B. Each of the regions A, B, and C may also be defined as, for example, a section indicated by starting and ending frame numbers. Further, depending on a ship type, each of the regions A, B, and C may be finely specified by a cargo hold number.

In an area where shear stress is large, compared with an area where shear stress is small, the velocity gradient is large and the flow velocity of fluid on the coating surface of the ship hull is high. Accordingly, compared with an area of the ship hull with small shear stress, the coating thickness in an area with large shear stress tends to be reduced quickly (for example, the coating thickness is reduced due to dissolution of paint at a faster rate).

In the process of FIG. 7, as described above, recommended coating-thickness distribution is determined based on a fluid analysis result indicating shear stress distribution such that the recommended coating thickness becomes larger in an area with larger shear stress. Thus, the process of FIG. 7 can generate useful support information that makes it possible to efficiently perform painting.

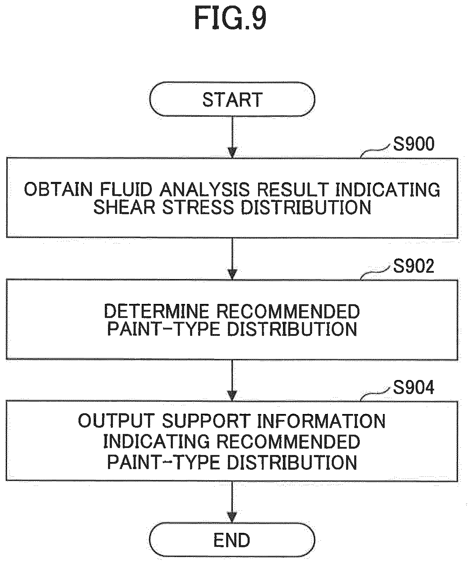

FIG. 9 is a flowchart illustrating another example of a process performed by the ship support apparatus 100B. For example, the process of FIG. 9 may be performed when planning initial painting of a ship hull or painting of a ship hull for maintenance.

Step S900 is the same as step S300 described above, and therefore the descriptions of step S900 are omitted here.

At step S902, based on a fluid analysis result obtained at step S900, the recommended painting method determiner 132 determines the distribution of types of paint recommended for the ship hull (which is hereafter simply referred to as "recommended paint-type distribution"). The recommended paint-type distribution indicates the distribution of recommended types of paint in a painting target area of the ship hull. Here, the frictional resistance characteristic of a painted area may vary depending on the type of paint used. For example, compared with normal paint, low friction paint having a hydrolysis effect and a hydrogel effect can reduce the frictional resistance of a painted area. Types of paint indicated by the recommended paint-type distribution are related to the types of paint that affect the frictional resistance of painted areas. The recommended paint-type distribution may indicate the types of paint recommended for respective areas or indicate the product names of paint recommended for respective areas. When painting is performed for maintenance, the recommended paint-type distribution may include areas whose recommended paint type is "none" (i.e., "painting is not required"). The painting target area is included in an area for which the distribution of shear stress is obtained based on the fluid analysis result.

For example, the recommended painting method determiner 132 determines recommended paint-type distribution based on the ratios of shear stress among areas of the ship hull. That is, the recommended painting method determiner 132 determines recommended paint-type distribution such that the frictional resistance reducing effect (and ultimately the fuel-saving effect) of the recommended paint type of an area with relatively large shear stress becomes greater than the frictional resistance reducing effect of the recommended paint type of an area with relatively small shear stress. In this case, the recommended painting method determiner 132 may be configured to derive the distribution of flow velocity of fluid on the coating surface of the ship hull based on the shear stress distribution (or to obtain a fluid analysis result indicating the distribution of flow velocity), and to determine recommended paint-type distribution based on the ratios of flow velocity among areas of the ship hull. That is, the recommended painting method determiner 132 determines recommended paint-type distribution such that the frictional resistance reducing effect of the recommended paint type of an area where flow velocity is relatively high becomes greater than the frictional resistance reducing effect of the recommended paint type of an area where flow velocity is relatively low. The degree of the frictional resistance reducing effect may be determined based on a measurement result and an analysis result of the frictional resistance of each painted area. For example, the frictional resistance of a painted area may be obtained by placing a painted test plate in a water tunnel in an orientation parallel to the water flow and by measuring a force applied to the test plate using a load cell.

At step S904, based on the recommended paint-type distribution determined at step S902, the support information output unit 134 outputs support information indicating the recommended paint-type distribution on the display device 110. The support information may be any type of information that directly or indirectly indicates the recommended paint-type distribution. The support information may simply indicate types of paint recommended for respective areas of the ship hull (which are hereafter referred to as "recommended paint types"), or may indicate boundaries (or perimeters) each of which indicates a region with a same recommended paint type. Also, the support information may indicate a painting method. In this case, the support information may include information indicating amounts of paint and a cost necessary to perform the painting method. The painting method is determined based on the recommended paint-type distribution. However, the painting method may use a paint type distribution that does not completely match the recommended paint-type distribution to improve the ease of painting work. For example, a region with a recommended paint type may be expanded outward to have a square measure that is greater than a predetermined value.

As described above, compared with an area of a ship hull with smaller shear stress, an area of the ship hull with larger shear stress contributes more to the frictional resistance of water to the entire ship hull during traveling. Accordingly, the frictional resistance of water to the entire ship hull can be more effectively reduced by reducing the frictional resistance of an area with larger shear stress than by reducing the frictional resistance of an area with smaller shear stress.

In the process of FIG. 9, as described above, a recommended paint-type distribution is determined based on a fluid analysis result indicating shear stress distribution such that a paint type with a greater frictional resistance reducing effect is recommended for an area with larger shear stress. Thus, the process of FIG. 9 can generate useful support information that makes it possible to efficiently perform painting.

The process of FIG. 9 may be combined with the process of FIG. 7. For example, at step S902, the recommended painting method determiner 132 may determine recommended coating-thickness distribution based on a fluid analysis result indicating the distribution of shear stress and determine a recommended paint type for each region having a same recommended coating thickness. In this case, the support information substantially includes recommended coating-thickness distribution as well as recommended paint-type distribution.

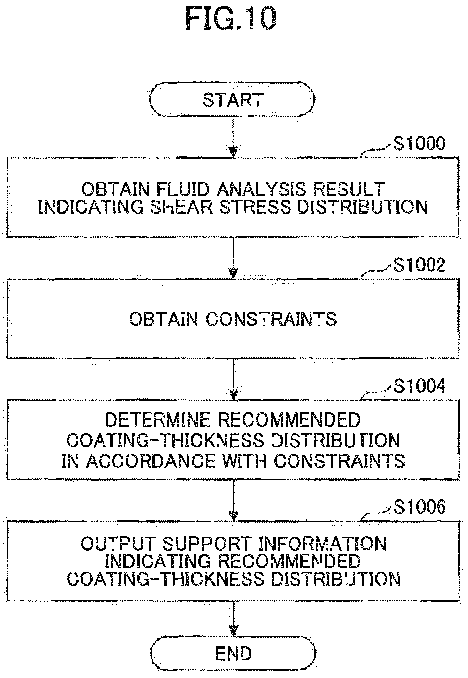

FIG. 10 is a flowchart illustrating still another example of a process performed by the ship support apparatus 100B. For example, the process of FIG. 10 may be performed when planning initial painting of a ship hull or painting of a ship hull for maintenance.

Steps S1000 and S1006 are respectively the same as steps S700 and S704 described above, and therefore their descriptions are omitted here.

At step S1002, the recommended painting method determiner 132 obtains a constraint(s). For example, the constraint may be based on information input by a user via the input unit 107. In this case, the constraint may be input by the user via the input unit 107 together with a support start command. Alternatively, the recommended painting method determiner 132 may request a user to input a constraint(s) on the input unit 107 via an interactive user interface. At least one of the time and the cost available for painting may be used as the constraint. For example, the upper limits of the time and the cost available for painting may be used as constraints.

At step S1004, based on the fluid analysis result obtained at step S1000 and in accordance with the constraints obtained at step S1002, the recommended painting method determiner 132 determines recommended coating-thickness distribution.

For example, the recommended painting method determiner 132 temporarily determines recommended coating-thickness distribution within a range that satisfies the constraints (the time and the cost available for painting). Then, the recommended painting method determiner 132 calculates a fuel-saving effect that is expected to be achieved when painting is performed according to the temporarily-determined recommended coating-thickness distribution. In this case, the fuel-saving effect to be calculated may include a fuel-saving effect provided by the reduced surface roughness (which is reduced by painting) and may also include a fuel-saving effect provided by a characteristic (e.g., a hydrogel effect) of a coating obtained by painting. For example, the recommended painting method determiner 132 calculates a fuel-saving effect during a predetermined time period based on the (reduced) surface roughness expected to be achieved when painting is performed according to the temporarily-determined recommended coating-thickness distribution and other parameters related to the fuel-saving effect (e.g., propulsive performance, wetted surface area, various coefficients, displacement, ship speed, fuel price, and operating ratio). The predetermined time period may be set at any value. For example, the predetermined time period may be a period between the current time and the next or subsequent time when maintenance is performed in the dock. In this case, the fuel-saving effect may be calculated taking into account changes in the surface roughness during the predetermined period. The recommended painting method determiner 132 calculates an evaluation value indicating a relationship between the calculated fuel-saving effect and a maintenance cost necessary to perform painting according to the temporarily-determined recommended coating-thickness distribution. The evaluation value may be calculated based on an evaluation function with which the evaluation value becomes closer to the optimum value as the maintenance cost decreases and the fuel-saving effect increases. Then, the recommended painting method determiner 132 searches for the optimum solution of the relationship between the fuel-saving effect and the maintenance cost by changing the recommended coating-thickness distribution in accordance with the constraints, and determines the recommended coating-thickness distribution resulting in the optimum solution as the final recommended coating-thickness distribution.

Alternatively, the recommended painting method determiner 132 may determine the recommended coating-thickness distribution within a range satisfying the constraints according to methods similar to the above-described first and second methods for determining priority areas. In this case, "determining priority areas" corresponds to "determining areas with relatively-large recommended coating thickness" in a process of determining recommended coating-thickness distribution.

In the process of FIG. 10, as described above, recommended coating-thickness distribution is determined based on a fluid analysis result indicating shear stress distribution such that the recommended coating thickness becomes larger in an area with larger shear stress. Thus, the process of FIG. 10 can generate useful support information that makes it possible to efficiently perform painting. Also in the process of FIG. 10, recommended coating-thickness distribution is determined in accordance with constraints. This in turn makes it possible to generate useful support information that makes it possible to optimally perform painting in accordance with the constraints.

In the process of FIG. 10, support information is generated based on recommended coating-thickness distribution resulting in the optimal solution. However, the present invention is not limited to this example. For example, support information may indicate several candidates of recommended coating-thickness distribution that satisfy constraints together with information indicating maintenance costs and fuel-saving effects of the respective candidates. This approach enables a user to compare and evaluate multiple candidates.

Also in the process of FIG. 10, recommended paint-type distribution in accordance with constraints may be determined instead of or in addition to determining recommended coating-thickness distribution in accordance with constraints. Also in this case, the recommended painting method determiner 132 may search for the optimum solution of the relationship between the fuel-saving effect and the maintenance cost by changing the recommended paint-type distribution in accordance with the constraints, and determine the recommended paint-type distribution resulting in the optimum solution as the final recommended paint-type distribution. Also, the recommended painting method determiner 132 may determine the recommended paint-type distribution within a range satisfying the constraints according to methods similar to the above-described first and second methods for determining priority areas. In this case, "determining priority areas" corresponds to "determining areas where paint types with relatively-high frictional-resistance reducing effects are used" in a process of determining recommended paint-type distribution.

In the second embodiment described above, the support information is useful in planning maintenance involving painting and can also be used in planning initial painting of a ship hull (i.e., painting during the construction of a ship). Also, painting for maintenance is not necessarily performed after blasting, and may be performed directly on an existing coating.

Embodiments of the present invention are described above. However, the present invention is not limited to the specifically disclosed embodiments, and variations and modifications may be made without departing from the scope of the present invention. Also, all or some components described in the embodiments may be combined.

For example, although a fluid analysis result indicating shear stress distribution is used in the first and second embodiments described above, a measurement result indicating shear stress distribution may be used instead of the fluid analysis result. The measurement result indicating shear stress distribution may be obtained by, for example, a test. For example, the measurement result may be obtained by causing fine objects (tracers) to flow through water in a water tank test and observing the flow field, or by observing the flow field around a ship hull using a large number of Doppler logs attached to the ship hull.

Also, the first embodiment and the second embodiment described above may be combined. For example, when maintenance is a combination of blasting and painting, support information may be output for each of blasting and painting according to the first embodiment and the second embodiment.

Also, in the first embodiment and the second embodiment, a fluid analysis result indicating the distribution of another parameter that correlates with shear stress distribution may be used instead of the fluid analysis result indicating shear stress distribution. Examples of other parameters include a flow velocity on a hull surface and a velocity gradient on a hull surface.

### EXPLANATION OF REFERENCE NUMERALS

- 100 (100A, 100B): Ship support apparatus
- 120: Analysis data acquirer
- 122: Priority area determiner
- 124: Support information output unit
- 132: Recommended painting method determiner
- 134: Support information output unit
- 140: Analysis result database

## Claims

1. A ship support apparatus configured to output support information indicating at least one of a maintenance method recommended for a hull of a target ship and a painting method recommended for the hull of the target ship based on a fluid analysis result or a measurement result that indicates one of
a distribution of shear stress on a hull surface of the target ship or another ship whose type is the same as a type of the target ship, and
a distribution of another parameter of the target ship or the another ship that correlates with the distribution of shear stress.

2. The ship support apparatus as claimed in claim 1, wherein the support information includes information indicating priority areas of the hull of the target ship on which maintenance is to be performed.

3. The ship support apparatus as claimed in claim 2, wherein the ship support apparatus is configured to extract multiple areas in descending order of the shear stress based on the fluid analysis result or the measurement result and determine the priority areas based on the extracted areas.

4. The ship support apparatus as claimed in claim 3, wherein the ship support apparatus is configured to obtain a constraint and extract the multiple areas in accordance with the obtained constraint.

5. The ship support apparatus as claimed in claim 2, wherein
the maintenance includes blasting; and
the ship support apparatus is configured to
preferentially extract a region including areas of the hull whose shear stress is relatively large over a region including areas of the hull whose shear stress is relatively small based on the fluid analysis result or the measurement result,
while changing a square measure of the extracted region, calculate, for each value of the changed square measure, a relationship between a fuel-saving effect expected to be achieved when surface roughness is reduced by performing the blasting on the extracted region and a maintenance cost necessary to perform the blasting, and
determine the priority areas based on results of the calculation.

6. The ship support apparatus as claimed in claim 1, wherein the support information includes information indicating at least one of a distribution of coating thickness recommended for the hull of the target ship and a distribution of types of paint recommended for the hull of the target ship.

7. The ship support apparatus as claimed in claim 6, wherein
the support information indicates the distribution of coating thickness recommended for the hull of the target ship; and
the ship support apparatus is configured to generate the support information such that the coating thickness recommended for an area with relatively large shear stress becomes greater than the coating thickness recommended for an area with relatively small shear stress.

8. The ship support apparatus as claimed in claim 6, wherein
the support information indicates the distribution of types of paint recommended for the hull of the target ship; and
the ship support apparatus is configured to generate the support information such that a frictional resistance of an area with relatively large shear stress is reduced more by the paint compared with an area with relatively small shear stress.

9. The ship support apparatus as claimed in claim 5, wherein the ship support apparatus is configured to
calculate, for each of painting methods, a relationship between a fuel-saving effect expected to be achieved when painting is performed according to the each of the painting methods and a maintenance cost necessary to perform the painting according to the each of the painting methods, and
determine the recommended painting method based on results of the calculation.

10. A method, comprising:
determining at least one of a maintenance method and a painting method to be performed on a hull of a target ship based on a fluid analysis result or a measurement result that indicates one of
a distribution of shear stress on a hull surface of the target ship or another ship whose type is the same as a type of the target ship, and
a distribution of another parameter of the target ship or the another ship that correlates with the distribution of shear stress.
